# EUROPEAN PATENT APPLICATION

(11) **EP 3 819 064 A1**
(43) Date of publication of application: **12.05.2021**
(21) Application number: 20206043.0
(22) Date of filing: 05.11.2020
(51) Int. Cl.: B23K 20/02, F28D 9/00, F28F 7/02

(54) **METHOD FOR THE MANUFACTURE OF MONOLITHIC MULTI-TUBE HYDRAULIC DEVICES, IN PARTICULAR HEAT EXCHANGERS**

(30) Priority: 05.11.2019 IT 201900020376
(71) Applicant: Microchannel Devices S.r.l., 10121 Torino (IT)
(72) Inventor: VAIARELLI, Alessandro, 10121 TORINO (IT); PRIARONE, Paolo Claudio, 10121 TORINO (IT)
(74) Representative: Plebani, Rinaldo

(57) **Abstract**

A method in which monolithic metallic hydraulic modules (24) having therein tubular ducts (20) open towards first opposite ends (5, 6) of the hydraulic modules are stacked with their second ends, solid and arranged laterally to the ducts, overlapping and provided with through holes (12) that are perpendicular to the faces delimiting each hydraulic module, with the through holes coaxially aligned, and then perimetrically welded to each other to form interfaces (26) that are connected to each other through the holes (12), in which the vacuum is created to then subject the stack (29) of monolithic hydraulic modules to an HIP cycle at high pressure at least some of the monolithic hydraulic modules (24) are formed by enclosing a ducted metallic plate (19), vacuum-sealed, between two metallic foils (13) perimetrically welded, which are joined to the ducted plate by diffusion bonding, preferably formed by lamination.

## Description

### Cross-Reference to related Applications

This patent application claims priority from Italian patent application no. 102019000020376 filed on 5/11/2019.

### Technical Field of the Invention

This invention relates to a method for manufacturing monolithic multi-tube hydraulic devices, in particular heat exchangers, intended to operate under conditions of elevated temperatures and pressures.

### Prior Art

As is well known, in the processes of heat exchange between fluids, and more generally in the transport of fluids, where the fluids in question are at high pressures and temperatures, hydraulic devices of the monolithic type, in particular multi-tube heat exchangers, are used quite frequently as an alternative to conventional tubular heat exchangers , and wherein the hydraulic circuits are formed inside a metallic block, generally made of high-strength steel or super alloys, for example Ni-Cr.

Since it would be difficult and costly to form such internal hydraulic circuits by machining a metallic monoblock, the technology called "diffusion bonding" is generally used to make several metal sheets or plates monolithic. The sheets or plates are stacked one on top of the other and carry on one or both of their faces a part of the hydraulic circuit to be obtained.

"Diffusion bonding" technology or "diffusion welding" is a solid-state welding technique that is well known in engineering and used in metalworking; it is capable of joining two metals whether they are the same or not. It works on the principle of solid-state diffusion, in which atoms of two solid, metallic surfaces inter-diffuse over time.

A type of heat exchanger obtained with this technology is the one called PCHE (Printed Circuit Heat Exchanger), wherein the hydraulic circuit is made by superimposing metallic plates engraved using printed circuit technology.

According to FR3042859, continuous flat plates and plates perforated in the centre and provided, crosswise, with a plurality of bars on the central hole are overlapped and subjected to diffusion bonding by welding-diffusion or by uniaxial compaction or by a hot isostatic compression (HIP) cycle at relatively low pressure on the sealed and degassed stack so as to form a first and a second hydraulic circuit, stacked on top of each other, between the plates. Following this, a second HIP cycle is performed at higher pressure after opening the hydraulic circuit channels.

A disadvantage of this technology is the potentially excessive distance between the layers of plates forming the circuits and the instability of the overlapping plates before the application of the first HIP cycle. In addition, this solution has implementation difficulties and high production costs.

According to US20160107274, two plates that have channels/grooves mirroring each other are coupled, so as to form a first fluid circuit. This element formed by two plates is sealed and degassed using a capsule; following this, a low-pressure HIP cycle is applied. The channels are then opened towards the outside by machining and a second, high-pressure HIP cycle is then applied. The resulting plates are then ducted on the two outer sides, thus forming a second fluid circuit. Multiple elements obtained using this method are stacked and a first HIP cycle is performed at low pressure with the channels of the second circuit closed. These channels are then opened and a final HIP cycle is performed at high pressure.

The process described is laborious and time-consuming to implement. In addition, a very high level of accuracy is required to match the fluid circuits and several HIP cycles must be applied, which increases costs and may make this solution unviable.

Finally, no known manufacturing method makes it possible to easily obtain large channels, for example, channels larger than 5 mm or slightly more without the risk of collapse during the diffusion welding step.

### Summary of the Invention

The object of this invention is to provide a method for manufacturing monolithic multi-tube hydraulic devices, in particular heat exchangers, free of the drawbacks of the prior art, using which the following advantages are simultaneously obtained: good mechanical strength in the joints at the interface of the various overlapping plates; no significant deformation of the channels forming the hydraulic circuits, in particular in the presence of large channels; and no risk of an enlargement of the crystalline grains of the structural material of the plates.

According to the invention, a method for manufacturing monolithic multi-tube hydraulic devices, in particular heat exchangers, and a method for obtaining a monolithic hydraulic module, having the characteristics set forth in the appended claims, are, therefore, provided.

### Brief Description of the Drawings

The invention will now be described with reference to the attached drawings, which illustrate non-limiting embodiments thereof, wherein:
- Figure 1 schematically illustrates a three-quarter, side perspective view of a first component of a hydraulic device or module, in the illustrated example a heat exchanger, that can be manufactured according to the method of the invention;
- Figure 2 schematically illustrates a first step of the manufacturing method according to the invention;
- Figures 3 and 4 schematically illustrate a second and a third step of the manufacturing method of the invention, which ultimately provide a pre-assembled monolithic hydraulic module;
- Figure 5 schematically illustrates a fourth step of the method according to the invention in which a plurality of identical hydraulic modules, obtained by means of the steps in Figures 2 to 4, are joined together to form a monobloc hydraulic device provided with internal hydraulic circuits; and
- Figures 6 and 7 illustrate two possible variants of the component in Figure 1 to be used in the steps of Figure 2 or 3.

### Detailed Description

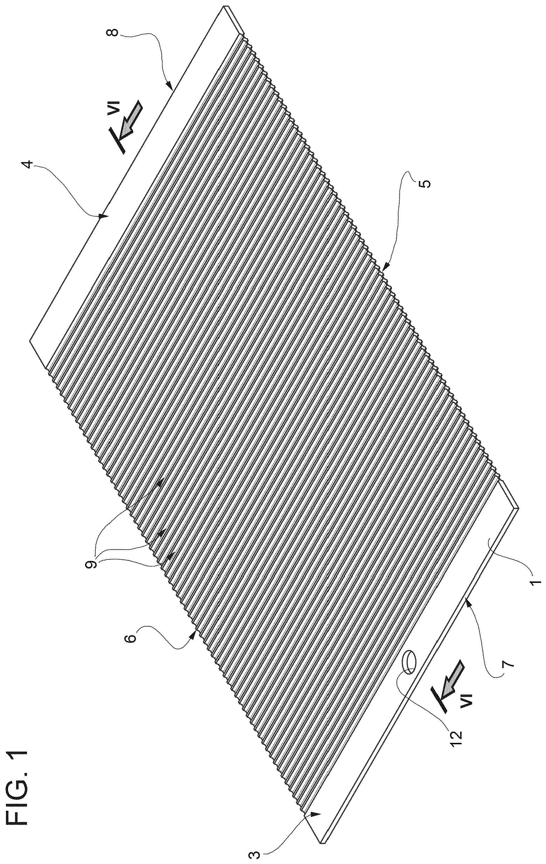

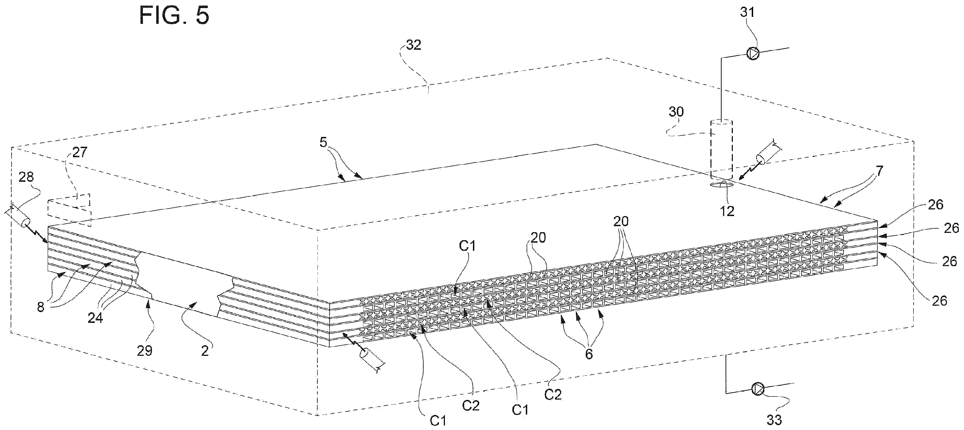

With reference to Figure 1, reference number 10 here indicates, as a whole, a hydraulic component for a monolithic multi-tube hydraulic device 2, in particular a heat exchanger, illustrated schematically and only partially in Figure 5.

The hydraulic component 10 consists of a flat metallic plate 1 delimited between a first and second opposite flat surface thereof, indicated respectively with the reference numbers 3 and 4, and between respective first opposite ends 5, 6 and second opposite ends 7, 8 of the plate 1; the second opposite ends 7, 8 of the plate 1 are arranged transversely to the first ends 5, 6.

In the illustrated, non-limiting example, corresponding to a preferred embodiment of the invention, the plate 1 is rectangular in shape and the ends 5, 6 and 7, 8 are defined by respective longitudinal sides that are straight and, respectively, by respective transverse sides which are straight too of the plate 1.

According to the invention, in order to make the monolithic hydraulic device or heat exchanger 2, multiple flat metallic plates 1, such as the plate 1 in Figure 1 described above, must first be made.

In particular, the plate 1 / each plate 1 is formed so that, on at least one of its two surfaces 3, 4, multiple, respective grooves 9 are obtained, extending between the first ends 5, 6 and parallel to the second ends 7, 8.

According to one aspect of the invention, in this step the second ends 7, 8 of the flat plate 1 are left solid (at full thickness) and without grooves 9, so as to e obtain at the end the hydraulic component 10 consisting of / defining a ducted plate.

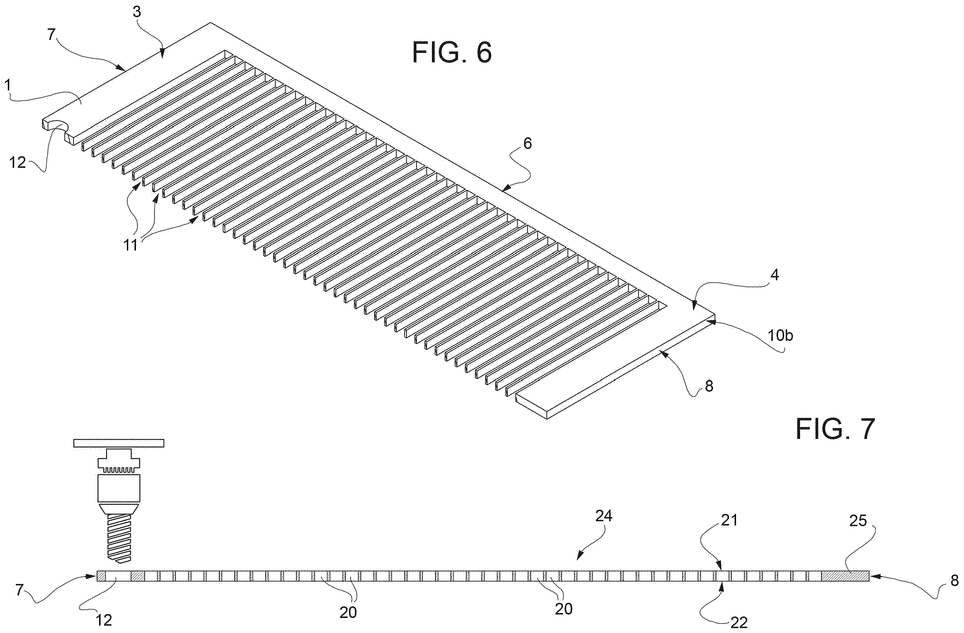

According to a possible variant, illustrated in Figure 6, instead of simple grooves 9 made on one or both surfaces 3, 4, the metallic plate 1 is machined so as to form across it, perpendicularly to the first and second surfaces 3, 4, multiple slots 11 extending between the first ends 5, 6 (of which only the end 6 is visible in Figure 6, since the plate 1 in Figure 6 is illustrated in cross-section according to a plane VI-VI represented in Figure 1) and parallel to the second ends 7, 8, leaving the second ends 7, 8 of the flat plate 1 solid and devoid of slots 11, so as to obtain a hydraulic component 10b, again consisting of a ducted plate, but which is ducted in a slightly different way from the one illustrated in Figure 1.

The grooves 9 and/or the slots 11 are preferably obtained from continuous flat metallic plates, i.e. with the surfaces 3, 4 flat and continuous, by machining or chemical etching, for example with the technology by which printed circuit boards are made.

In all cases, according to an important aspect of the invention, a through hole 12 is formed at the at least one of the second ends 7, 8, namely at end 7 only in the non-limiting example illustrated, which hole may be round or slot-shaped, is arranged to the side of the grooves 9 or slots 11 and is formed perpendicularly to the first and second surfaces 3, 4.

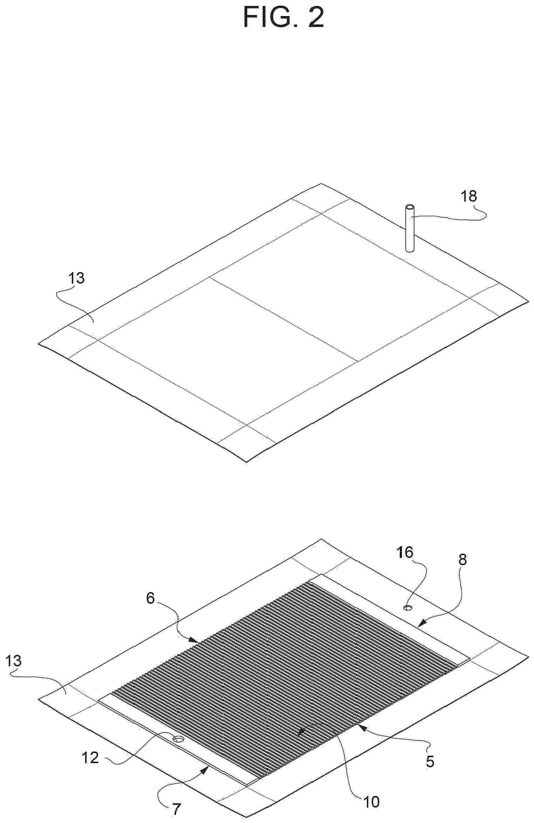

With reference now to Figure 2, once the ducted plate or hydraulic component 10, 10b has been obtained, this component or ducted plate 10,10b, perforated by the hole 12 and obtained in the manner described, is enclosed , between two metallic foils 13, which are thinner than the flat plate 1 and have dimensions such as to extend overhanging beyond the first and second ends 5, 6 and 7, 8 of the ducted plate 10/10b, corresponding to the first and second ends of the starting flat metallic plate 1.

It should be noted that the dimensions and, in particular, the thickness measured perpendicularly to the surfaces 3, 4 of the plate 1 are such that the plate 1 is basically rigid, while the dimensions, and in particular the thickness measured perpendicularly to the surfaces 3, 4 of the foils 13 are such that the same are at least partially, elastically deformable.

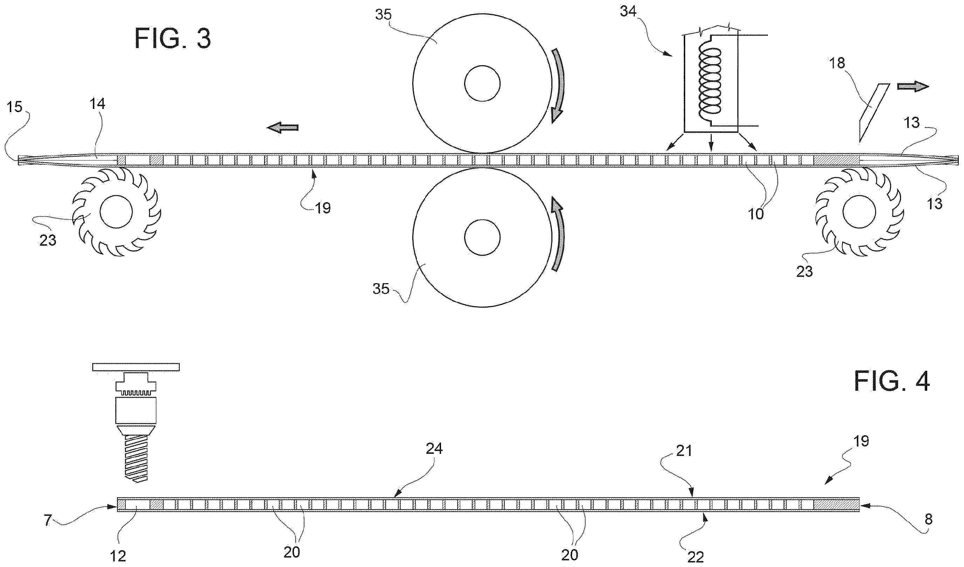

Next, a step is performed in which the foils 13 are perimetrically welded to each other, in a continuous manner, so as to enclose the ducted plate 10/10b in a fluid-tight chamber 14 (Figure 3) defined by the two metallic foils 13 welded together to form a continuous weld seam 15 (Figure 3).

At this point, an additional step of the method according to the invention is carried out by means of which at least one of the metallic foils 13 is perforated laterally (i.e. outside of the volume occupied by the ducted plate 10/10b) after the perimetric welding of the foils, and a metal pipe 18 is then welded onto a resulting through hole 16, which therefore results in hydraulic communication with the fluid-tight chamber 14.

According to a further step of the method of the invention, it is then proceeded to create vacuum, in a known manner, inside the fluid-tight chamber 14 through the pipe 18 and then to seal the pipe 18, for example by welding, so as to maintain the vacuum in the chamber 14, which contains the ducted plate 10/10b, which is at this point, thanks to the vacuum formed in the chamber 14, in close contact with the foils 13, which cover and close the grooves 9, or the slots 11, all the air that could be found between the ducted plate 10/10b and the plates 13 having been eliminated.

According to a further step of the method of the invention, it is then proceeded to join, by diffusion welding of "diffusion bonding", the ducted plate 10/10b to the two metallic foils 13, so as to form a monolithic assembly 19 (Figure 4) consisting of the starting flat plate 1, successively machined, and of the two metallic foils 13 and provided therein with a plurality of tubular ducts 20 defining one hydraulic circuit formed by the grooves 9 or slots 11 closed on the side of both the first and second flat surfaces 3, 4 and towards the first ends 5, 6 by the metallic foils 13, which delimit a first and a second flat face, 21,22 respectively, of the monolithic assembly 19 (Figure 4).

According to a further step of the method according to the invention, schematically illustrated in Figure 3, after obtaining the monolithic assembly 19, this is trimmed by means of mechanical cutting (schematically shown by a pair of circular saws 23) up to the at least first 5, 6 and second 7, 8 ends of the starting flat metallic plate 1 and so as to open at least some or all of the tubular ducts 20 at least at one of the ends 5, 6. In particular, all the tubular ducts 20 are opened when they are all hydraulically arranged in parallel, i.e. arranged parallel and not connected to each other, as illustrated, in a non-limiting way, in the appended drawings. Vice versa, if the lay-out of the hydraulic circuit formed from the tubular ducts 20 were different, for example if several ducts 20 were hydraulically arranged in sequence (for example by means of short transverse sections, according to a snake-like pattern), only the first and the last tubular duct 20, already connected in series within the ducted plate 10/10b, are opened.

Finally, as schematically illustrated in Figure 4, the through hole 12 previously formed at the at least one of the second ends 7, 8 of the flat plate 1 is opened (reopened) by perforating both flat faces 21, 22 of the monolithic assembly 19 at the through hole 12 previously obtained through (in the illustrated example) the end 7, which had been closed by the application of the two metallic foils 13.

With the hole 12 reopened and the edges trimmed so as to restore the ends 5, 6 and 7, 8 of the plate 1 as ends of the monolithic assembly 19 and with some or all of the tubular ducts 20 open at least at one of their opposite ends, that is, at one or both of the ends 5, 6 of the starting plate 1, according to what has been specified above, the monolithic assembly 19 comes to constitute a monolithic metallic hydraulic module 24 (Figures 4 and 5) provided therein with a hydraulic circuit formed from the open tubular ducts 20 that are all hydraulically connected with the environment outside the monolithic assembly 19.

As a result of the method described thus far, this monolithic metallic hydraulic module 24 obtained by diffusion welding can have relatively large ducts 20 that are simply obtained by providing grooves 9 with suitable depths and widths. In any case, according to one aspect of the invention, if both surfaces 3, 4 of the starting plate 1 had grooves 9, these grooves must be of identical depths and widths, so as to ensure stability, as will be seen, during the subsequent stages of production. In the latter case, the module 24 can thus be provided with a double hydraulic circuit, both circuits formed from ducts 20 stacked vertically in correspondence to each other, both formed from one of the surfaces 3, 4 of the starting plate 1 and from one of the foils 13 firmly welded thereto.

Alternatively, monolithic hydraulic modules 24 of a first and second type can be made, each having one hydraulic circuit only, but formed from ducts 20, which in this case, may be of different sizes, shapes, and lay-outs, so as to obtain even significantly different hydraulic circuits on different hydraulic modules.

According to another possible variant, schematically illustrated in Figure 7, a hydraulic module 24 according to the invention can also be obtained in a different way, in particular if provided with relatively large ducts 20, in this case consisting of a simple metallic drawn element or profile 25 delimited between a pair of opposite flat faces 21, 22 and provided internally with a plurality of longitudinal tubular ducts 20 open at its opposite longitudinal ends, transverse to opposite lateral ends 7, 8 of the profile 25 defining its longitudinal sides.

In this case, in order to obtain the hydraulic module 24 according to the invention, it is enough to form, at least at one of the ends 7, 8, a through hole 12 (Figure 7) through the metallic drawn element 25 that is arranged to the side of the ducts 20 and perpendicularly to the faces 21, 22.

In order to obtain the monolithic multi-tube hydraulic device or heat exchanger 2 according to the method of the invention, multiple monolithic metallic hydraulic modules 24, obtained according to one of the methods described so far, are required.

The invention, therefore, relates not only to a method for obtaining a monolithic hydraulic module 24 according to what is illustrated in Figures 1-4, but also to a method for manufacturing the device or heat exchanger 2 in Figure 5, which method involves the following steps, with reference to what is schematically illustrated in Figure 5, partly in a continuous line and partly in a dashed line.

In a first step, multiple first and second monolithic metallic hydraulic modules 24 provided internally with a first and a second hydraulic circuit C1, C2 are obtained. These are formed from tubular ducts 20, preferably with a different cross section (and/or shape and/or pattern), that are open at their opposite ends arranged at the first opposite ends 5, 6 of the hydraulic modules in such a way as to be all hydraulically connected with the environment outside the modules 24.

These hydraulic modules 24 are formed (as described above) so as to have identical second ends 7, 8, which are solid and devoid of the tubular ducts 20. These second ends 7, 8 are arranged laterally with respect to the first and second hydraulic circuits C1, C2 and between the first opposite ends 5, 6 of the hydraulic modules 24. In addition, these second ends 7, 8 are provided, at least in one of the two (in the example illustrated in the end 7), with a through hole 12 oriented perpendicularly to a first and a second flat face 21, 22 delimiting each hydraulic module 24 and arranged parallel to the tubular ducts 20.

Subsequently, a step is carried out in which the monolithic metallic hydraulic modules 24 are stacked on top of each other, alternating, for example, a first and a second hydraulic module 24, so that the hydraulic circuits C1 and C2 (which may differ from each other in cross-section and/or shape of the ducts and/or lay-out) are arranged alternately and overlapping each other, and, above all, according to a specific aspect of the invention, so that the through-holes 12 of all the first and second hydraulic modules 24 are arranged aligned coaxially and in hydraulic communication with each other at an interface 26 between a first face 21 and a second face 22 of two adjacent hydraulic modules 24.

To achieve this alignment, shoulder squares 27 may be used, or stems inserted through the holes 12 (and/or through other similar holes, for example drilled in the end 8).

According to an additional step of the method of the invention, the faces 21 and 21 in contact with each pair of adjacent hydraulic modules 24 are continuously, perimetrically welded together, at the interface 26 and under edge of the through holes 12 (i.e. in a way that does not close them), an operation illustrated schematically in Figure 5 by means of a welding torch or electrode 28.

In this way, the first and/or second faces 21, 22 of all the first and second hydraulic modules 24 are joined together in a fluid-tight manner, so that the interfaces 26 between the first and second monolithic hydraulic modules 24 are connected to each other and to an environment outside the hydraulic modules 24, through the through-holes 12 only.

According to a further step of the invention, a molecular vacuum is created at this point within all the interfaces 26 through the through-hole 12 of a first or second hydraulic module 24 arranged at the top and/or at the base of a stack 29 formed by the first and second hydraulic modules 24 perimetrically welded to each other and then it is proceeded to close this through-hole 12, so as to maintain the vacuum in the interfaces 26.

In Figure 5, these operations are schematically represented by a little tube 30 that is brought against and welded to the hole 12, at the base or top of the stack 29, and by a vacuum pump 31 that is connected to the little tube 30; once the vacuum is created in all the interfaces 26, therefore between all the adjacent and facing faces 21, 22 of the overlapping modules 24, the little tube 30 is welded so as to close it and isolate the interfaces 26.

According to an additional and final step of the method of the invention, the stack 29 of monolithic hydraulic modules 24, aligned at the holes 12 and stabilised thanks to the perimeter welding of the faces 21, 22 at the interfaces 26, is subjected to an HIP (Hot Isostatic Pressure) cycle at high pressure until obtaining a monolithic metallic block formed from the union between them, by diffusion welding or "diffusion bonding", of the first and second hydraulic modules 24. For example, the stack 29 is introduced into a furnace or other device 32 (illustrated schematically in dashed lines in Figure 5) in which to subject the stack 29 of monolithic hydraulic modules 24 to the above-mentioned high-pressure HIP cycle in a known way. Thus, at the end, a finished multi-tube hydraulic device 2 is provided, which is made from a single monolithic metallic block, in turn formed by joining, by diffusion welding or "diffusion bonding", the first and second hydraulic modules 24. In this monobloc device 2, at least two hydraulic circuits C1 and C2 formed by tubular ducts 20, for example of different cross-sections (or shape or pattern) - for example alternating larger and smaller ones - are formed.

The phrase "molecular vacuum", in the interfaces 26 as defined above, means, herein and hereinafter, a vacuum that is created via the vacuum pump 31 and that is greater than 10⁻⁴ millibars. Since this is a "vacuum", stating that the vacuum is "greater than" means that the pressure (in this case, in the interfaces 26) is less than 10⁻⁴ millibars.

The diffusion bonding or diffusion welding step with the high-pressure HIP cycle is preferably conducted by means of an inert gas (for example argon) that is heated to a temperature that is a function of the metallic material with which the first and second monolithic hydraulic modules 24 are made and between 900 and 1,300 °C. The gas is fed, pressurised, into the furnace or device 32 at a pressure in the order of a thousand bars, for example 1,000 bars, by means of a pump 33, for example, so as to fill even under pressure all the tubular ducts 20, which thus cannot collapse. The interfaces 26, in which the vacuum has been created, remain isolated from the ducts 20 and from the external environment in which the HIP step is performed (for example consisting of the interior of the furnace or device 32).

The first and/or second monolithic hydraulic modules 24 are formed by means of the steps already described above for a single module 24 and, specifically:
- making a flat metallic plate 1 delimited between a first and second opposite flat surface 3, 4 thereof and between respective first 5, 6 and second 7, 8 opposite ends of the plate 1, the second ends 7, 8 of the plate 1 being arranged transversely to the first ends 5, 6;
- forming on at least one of the first or second surface 3, 4 or through the flat plate 1, perpendicularly to the first or second surface 3, 4, respective grooves 9 or slots 11 extending between the first ends 5, 6 and parallel to the second ends 7, 8, leaving the second ends 7, 8 of the flat plate 1 solid and without grooves 9 or slots 11, so as to obtain a hydraulic component 10 (or 10b) consisting of a ducted plate;
- drilling a through-hole 12 at the at least one of the second ends 7, 8, the hole being arranged at the side of the grooves 9 or slots 11 and perpendicular to the first and second surfaces 3, 4;
- enclosing the resulting ducted and perforated plate 10/10b between two metallic foils 13, thinner than the flat plate 1 and having dimensions such as to extend in a cantilever fashion beyond the ends 5, 6 and 7, 8 of the ducted plate 10/10b, corresponding to the first and second ends of the starting flat metallic plate 1;
- perimetrically welding the metallic foils 13 to one another in a continuous manner, so as to enclose the ducted plate 10/10b in a fluid-tight chamber 14 defined by the two welded metallic foils 13, to form a kind of wrapped "candy";
- laterally perforating one of the metallic foils 13 after the perimetric welding thereof and welding a metallic pipe 18 on a through-hole 16 thus obtained;
- creating the vacuum inside the fluid-tight chamber 14 through the pipe 18 and then sealing the pipe 18 so as to maintain the vacuum;
- joining, by diffusion bonding, the ducted plate 10/10b to the two metallic foils 13, so as to form a monolithic assembly 19 consisting of the starting flat plate 1 and of the two metallic foils 13 and provided therein with multiple tubular ducts 20 defining one hydraulic circuit C1 or C2 formed from the grooves 9 or slots 11 closed on the side of the first and second flat surfaces 3, 4 and towards the first ends 5, 6 by the metallic foils 13, which delimit a first and a second flat face 21, 22 of the monolithic assembly 19;
- trimming, by mechanical cutting, the monolithic assembly 19 thus obtained up to at least the first and second ends 5, 6 and 7, 8 of the starting flat metallic plate 1, so as to open at least some or all of the tubular ducts 20 at one of the first ends 5, 6 so that they are all hydraulically connected with the outside of the assembly 19; and
- opening the through hole 12 previously formed at the at least one of the second ends 7, 8 of the flat plate 1 by perforating both flat faces 21, 22 of the monolithic assembly 19 at the through hole 12 previously formed, which had been closed by the application of the two metallic foils 13.

According to one, not insignificant aspect of the invention, schematically illustrated in Figure 3, the step of joining by diffusion bonding is carried out by heating the two metallic foils 13 welded to one another and the ducted plate 10, 10b enclosed in the fluid-tight, vacuum-sealed chamber 14 formed from the two metallic foils 13 at a temperature comprised between 900 and 1,300°C, preferably by induction heating carried out with an inductor 34, and laminating the two metallic foils 13 on the ducted plate 10/10b between at least one pair of rolls 35 adapted to exert a pressure comprised between 100 and 300 bars on the foils 13 and on the ducted plate 10/10b, after the removal of the pipe 18 (Figure 3), which is, for example, welded to the base and then cut.

Alternatively, the step of joining, by diffusion bonding, the foils 13 and the ducted plate 10/10b is carried out by heating the two metallic foils 13 welded to one another and the ducted plate 10, 10b enclosed in the fluid-tight, vacuum-sealed chamber 14 formed from the two metallic foils 13 at a temperature comprised between 900 and 1,300°C and pressing the metallic foils 13 onto the ducted plate 10/10b at a pressure comprised between 100 and 300 bars by means of a hydraulic press, of a known type and not illustrated for simplicity.

According to another possible variant, the step of joining, by diffusion bonding, the foils 13 on/against the ducted plate 10/10b is carried out by means of an HIP or HUP (Hot Uniaxial Pressure) cycle at a temperature comprised between 900 and 1,300 °C and at a pressure comprised between 100 and 300 bars, performed with a conventional technique, inserting the "candy" formed by the ducted plate 10/10b and by the two foils 13 welded together, and between which a vacuum is made, within a suitable container.

According to one aspect of the invention, at least one of said first and/or second monolithic hydraulic modules 24 arranged alternately to form the stack 29 consists of a metallic drawn element 25 delimited between a pair of opposite flat faces 21, 22 and provided internally with a plurality of longitudinal tubular ducts 20 open at opposite first longitudinal ends of the drawn element 25. In this way, a hydraulic device or heat exchanger 2 can easily be obtained in which the two alternating circuits C1 and C2 have different cross sections.

The same result can be obtained in a simple manner by making each monolithic hydraulic module 24 according to the method described, beginning with a ducted plate 10/10b and two metallic foils 13, which are then joined, preferably by hot rolling.

All the purposes of the invention are, therefore, achieved.

## Claims

1. A method for the manufacture of monolithic multi-tube hydraulic devices (2), in particular heat exchangers, **characterised in that** it comprises the steps of:
- obtaining a plurality of first and second monolithic metallic hydraulic modules (24) provided therein with a first and/or a second hydraulic circuit (C1, C2) formed by tubular ducts (20) open at their opposite ends arranged at first opposite ends (5, 6) of the hydraulic modules; said hydraulic modules (24) being formed so as to have identical second ends (7, 8), solid and without said tubular ducts, which second ends are arranged laterally with respect to said first and second hydraulic circuits (C1, C2) and between the opposite first ends (5, 6) of the hydraulic modules and at least one of which second ends (7, 8) is provided with a through-hole (12) orientated perpendicularly to a first and a second flat face (21, 22) delimiting each hydraulic module (24) and arranged parallel to the tubular ducts (20);
- stacking the first and second monolithic hydraulic modules (24) on top of one another, so that the through-holes (12) of all the first and second hydraulic modules are aligned coaxially and in hydraulic communication with each other at an interface (26) between a first and a second face (21, 22) of two adjacent hydraulic modules (24);
- perimetrically welding the first and second faces (21, 22) of all the first and second hydraulic modules (24), in a continuous manner, at the interface (26) and under edge of the through-holes (12), so that the interfaces (26) between the first and the second monolithic hydraulic modules are connected to one another and to an environment external to the hydraulic modules only through said through-holes (12) ;
- creating a molecular vacuum inside all the interfaces (26) through the through-hole (12) of a first or second hydraulic module (24) arranged at the top and/or at the base of a stack (29) formed by the first and second hydraulic modules perimetrically welded to one another, and closing said through-hole, so as to maintain the vacuum in the interfaces;
- subjecting the stack (29) of monolithic hydraulic modules to a high-pressure hot isostatic pressure (HIP) cycle until obtaining a monolithic metallic block formed by joining together, by diffusion bonding, said first and second hydraulic modules (24).

2. The method according to claim 1, **characterised in that** the molecular vacuum in the interfaces (26) is greater than 10⁻⁴ millibars.

3. The method according to claim 1 or 2, **characterised in that** the step of diffusion bonding through the HIP cycle is carried out by means of a gas heated to a temperature depending on the metallic material with which the first and second monolithic hydraulic modules (24) are made, and comprised between 900 and 1,300°C, fed under pressure at a pressure to the order of a thousand bar, so as to fill in the whole all first and second hydraulic circuits (C1,C2).

4. The method according to one of the preceding claims, **characterised in that** said first and/or second monolithic hydraulic modules (24) are obtained by means of the steps of:
- producing a flat metallic plate (1) delimited between its first and second opposite flat surfaces (3, 4) and between respective first and second opposite ends (5, 6; 7, 8) of the plate, the second ends (7, 8) of the plate being arranged transversely to the first ends (5, 6);
- obtaining, on at least one of the first and second surfaces or through the flat plate, perpendicularly to the first and second surfaces, respective grooves (9) or slots (11) extending between said first ends (5, 6) and parallel to the second ends, leaving the second ends (7, 8) of the flat plate solid and with no grooves or slots, so as to obtain a hydraulic component constituted by a ducted plate (10; 10b);
- obtaining at the at least one of the second ends (7, 8) a through-hole (12) arranged on one side of the grooves (9) or slots (11) and perpendicularly to said first and second surfaces (3, 4);
- enclosing the ducted and perforated plate (10; 10b) thus obtained between two metallic foils (13), thinner than the starting flat plate (1) and having sizes such as to extend in a cantilever fashion beyond said first and second ends (5, 6; 7, 8) of the ducted plate, corresponding to the first and second ends of the starting flat metallic plate (1) ;
- perimetrically welding said metallic foils (13) to one another in a continuous manner, so as to enclose the ducted plate in a fluid-tight chamber (14) defined by the two welded metallic foils;
- laterally perforating one of the metallic foils (13) after the perimetric welding thereof and welding a metallic pipe (18) to a through-hole (16) thus obtained;
- creating the vacuum inside the fluid-tight chamber (14) through said pipe and then sealing the pipe so as to maintain the vacuum;
- joining, by diffusion bonding, the ducted plate (10, 10b) to the two metallic foils (13), so as to form a monolithic assembly (19) constituted by the starting flat plate and by the two metallic foils and provided therein with a plurality of tubular ducts (20) defining at least one hydraulic circuit (C1, C2) formed by said grooves (9) or slots (11) closed on the side of said first and second flat surfaces (3, 4) and towards the first ends (5, 6) by said metallic foils (13), which delimit a first and a second flat face (21, 22) of the monolithic assembly;
- trimming, by mechanical cutting, the monolithic assembly (19) thus obtained up to at least the first and second ends of the starting flat metallic plate (1), so as to open at least some or all of the tubular ducts (20) at the at least one of the said first ends (5, 6); and
- opening the through-hole (12) previously obtained at the at least one of the second ends (7, 8) of the flat plate by means of perforating both the flat faces (21, 22) of the monolithic assembly at said through-hole (12), which has been closed by the two metallic foils.

5. The method according to claim 4, **characterised in that** the step of joining by diffusion bonding is carried out by heating the two metallic foils (13) welded to one another and the ducted plate (10, 10b) enclosed in the fluid-tight, vacuum-sealed chamber (14) formed by the two metallic foils at a temperature comprised between 900 and 1,300°C, preferably by induction heating, and laminating the two metallic foils on the ducted plate between at least one pair of rolls (35) adapted to exert a pressure comprised between 100 and 300 bar on the foils and on the ducted plate.

6. The method according to claim 4, **characterised in that** the step of joining by diffusion bonding is carried out by heating the two metallic foils (13) welded to one another and the ducted plate (10, 10b) enclosed in the fluid-tight, vacuum-sealed chamber formed by the two metallic foils at a temperature comprised between 900 and 1,300°C and pressing the metallic foils onto the ducted plate at a pressure comprised between 100 and 300 bar by means of a hydraulic press.

7. The method according to claim 4, **characterised in that** the step of joining by diffusion bonding is carried out by means of a hot uniaxial pressure (HUP) or hot isostatic pressure (HIP) cycle at a temperature comprised between 900 and 1,300°C and at a pressure comprised between 100 and 300 bar.

8. The method according to one of the preceding claims, **characterised in that** at least one of said first and/or second monolithic hydraulic modules (24) is constituted by a metallic drawn element (25) delimited between a pair of opposite flat faces (21, 22) and provided internally therein with a plurality of tubular ducts (20) longitudinally opened at opposite first longitudinal ends of the drawn element.

9. A method for producing a monolithic hydraulic module (24), in particular usable for heat exchanger devices, **characterised in that** it comprises the steps of:
- producing a flat metallic plate (1) delimited between its first and second opposite flat surfaces (3, 4) and between respective first (5, 6) and second (7, 8) opposite ends of the plate, the second ends of the plate being arranged transversely to the first ends;
- obtaining, on at least one of the first and second surfaces or through the flat plate, perpendicularly to the first and second surfaces, respective grooves (9) or slots (11) extending between said first ends and parallel to the second ends, leaving the second ends (7, 8) of the flat plate solid and with no grooves or slots, so as to obtain a hydraulic component constituted by a ducted plate (10, 10b);
- obtaining at at least one of the second ends, a through-hole (12) arranged on one side of the grooves or slots and perpendicularly to said first and second surfaces;
- enclosing the ducted and thus obtained perforated plate between two metallic foils (13), thinner than the flat plate and having dimensions such as to extend in a cantilever fashion beyond said first and second ends of the ducted plate, corresponding to the first and second ends of the starting flat metallic plate;
- perimetrically welding said metallic foils (13) to one another in a continuous manner, so as to enclose the ducted plate in a fluid-tight chamber (14) defined by the two welded metallic foils;
- laterally perforating one of the metallic foils after their perimetric welding and welding a metallic pipe (18) on a through-hole (16) thus obtained;
- creating the vacuum inside the fluid-tight chamber through said pipe and then sealing the pipe so as to maintain the vacuum;
- joining the ducted plate to the two metallic foils by diffusion bonding, so as to form a monolithic assembly (19) constituted by the starting flat plate and by the two metallic foils and provided therein with a plurality of tubular ducts (20) defining a hydraulic circuit formed by said grooves or slots closed on the side of said first and second flat surfaces and towards the first ends by said metallic foils, which delimit a first and a second flat face (21, 22) of the monolithic assembly;
- trimming, by means of mechanical cutting, the monolithic assembly thus obtained up to at least the first and second ends of the starting flat metallic plate (1), so as to open at least some or all of the tubular ducts (20) at at least one of the said first ends; and
- opening the through-hole (12) previously bored at at least one of the second ends of the flat plate by means of perforating both the flat faces of the monolithic assembly at said through-hole, which had been closed by the two metallic foils.

10. A monolithic hydraulic module (24) made according to the method of claim 9.

11. A heat exchanger (2) obtained according to the method of the claims from 1 to 8.
